# EUROPÄISCHE PATENTANMELDUNG

(11) **EP 1 720 351 A2**
(43) Veröffentlichungstag der Anmeldung: **08.11.2006**
(21) Anmeldenummer: 05005722.3
(22) Anmeldetag: 16.03.2005
(51) Int. Cl.: H04N 7/173

(54) **Audio- und/oder visuelles Daten On-Demand-System**

(30) Priorität: 09.03.2005 EP 05005191
(71) Anmelder: Fellenberg, Stefan, 10719 Berlin (DE); Krause, Florian, 10247 Berlin (DE)
(72) Erfinder: Fellenberg, Stefan, 10719 Berlin (DE); Krause, Florian, 10247 Berlin (DE)

(57) **Zusammenfassung**

Vorrichtung zur Push/PulI Distribution und/oder Wiedergabe von audio- und/oder visuellen Daten, umfassend wenigstens einen Server und wenigstens einen Client, wobei der Server wenigstens eine Datenbank aufweist, die die Metadaten der ebenfall auf dem Serverdatenträger gespeicherten audiovisuellen Daten enthält sowie eine Steuerungseinheit zur Verwaltung der audio- und/oder visuellen Daten und Metadaten, wobei der Client wenigstens eine Datenbank aufweist, die wenigstens eine Teilmenge der Serverdatenbank, die die Metadaten der ebenfalls auf dem Client- Datenträger gespeicherten audio- und/oder visuellen Daten enthält sowie eine Steuerungseinheit zur Verwaltung und/oder Wiedergabe und/oder zum bidirektionalem Datentransfer der audio- und/oder visuellen Daten und/oder Metadaten sowie wenigstens eine Klang- und/oder Bilderzeugungseinheit aufweist.

## Beschreibung

### Die Erfindung betrifft ein audio- und/oder visuelles Daten On - Demand - System

Ein derartiges System ist bekannt als so genanntes Internetradio. Hierbei ist von Nachteil, dass das bekannte Verfahren mit der als Streaming bekannten Technik arbeitet. Beim Streaming wird z.B. eine Datenbreite von 128 Kbit (CD-Qualität) pro Zuhörer benötigt. Dies bedeutet bei lediglich 100 gleichzeitigen Hören eine Datenmenge von 3,5 TeraByte. Nachteil hiervon sind die hohen Kosten für den anfallenden Datenverkehr sowie die technischen Bewältigung der Datenmengen. Ein weiterer Nachteil ist, dass z.B. im Internet keine zugesicherte Bandbreite bei der Übertragung existiert und so bei Engpässen die Streaming-Übertragung zusammenbricht. Ein weiteres bekanntes Verfahren, "Differentiated Services" (RSVP), reserviert Bandbreiten zur Übertragung von Streams und wird in der Praxis aufgrund technischer Probleme sowie der hohen Kosten nicht eingesetzt.

Aufgabe der vorliegenden Erfindung ist es, die oben beschriebenen Nachteile zu vermeiden und ein preiswertes sowie zuverlässig funktionierendes System zur Übertragung und Disposition von audio- und/oder visuellen Daten, insbesondere on-demand, zu schaffen.

Die vorliegende Aufgabe wird mittels eines Verfahrens und einer Vorrichtung zur Distribution von audio- und/oder visuellen Daten gemäß den unabhängigen Ansprüchen gelöst. Hierbei ist von Vorteil, dass der Client auch dann audio und/oder visuelle Daten wiedergibt, wenn die Netzwerkverbindung und/oder Internetverbindung unterbrochen ist. Ebenfalls werden die Übertragungskosten/-Mengen durch die verwendete Push/Pull Technologie dramatisch gesenkt.

Bei der Umsetzung des Systems wurde großer Wert auf eine hohe Verfügbarkeit gelegt. Daher kam ein Live-Streaming nicht in Frage, sondern es wurde ein Verfahren entwickelt, das den Datenbestand des Servers mit dem der Clients abgleicht, so dass diese dann die vorhandenen Elemente auch ohne Internet-Verbindung von einem lokalen Speichermedium wiedergeben können.

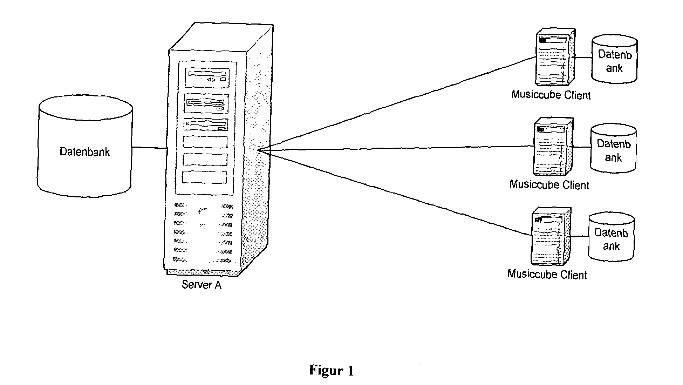

In der Figur 1 sind folgende Elemente dargestellt:
- Links ist der zentrale Server A zu erkennen. Es handelt sich dabei um verschiedene Rechner, welche allerdings durch einen Loadbalancer nach dem Round-Robin Prinzip rotiert werden und sich so im Internet unter einer gemeinsamen Adresse präsentieren. Die Datenbank läuft auf einem weiteren Rechner und ist von den Servern über das interne Netzwerk erreichbar.
- Auf der rechten Seite sind beispielhaft 3 Clients dargestellt. Dabei handelt es sich um PCs, welche entweder über eine LAN-Verbindung oder per ISDN-Dialup an das Internet angebunden sind. Auf diesen Rechnern läuft neben der Abspiel-Software für Audio das eigens entwickelte Replikations-Tool, welches im weiteren erläutert wird. Die Häufigkeit der Update-Intervalle ist auf der Webseite einstellbar, im Falle einer ISDN-Verbindung wird nach Abschluß der Synchronisation die Verbindung getrennt, so dass hier kein weiterer Datenverkehr und möglicherweise Übertragungskosten entstehen.
- In der Mitte der Grafik ist die Kommunikation der Clients mit dem Server dargestellt. Man muß dabei zwischen zwei verschiedenen Programmodulen unterscheiden:
   ■ Die Einstellungen bezüglich des Programms sowie Meta-Informationen zu den audiovisuellen Dateien werden auf dem Server in einer zentralen Datenbank gespeichert. Damit die Clients über diese Informationen verfügen können, wird ein Verfahren mit dem Namen "Replikation" benutzt. Dabei wird vom Server eine binäre Logdatei über alle modifizierenden Queries (z.B. Datensatz gelöscht) angelegt. Die Clients haben Zugriff auf diese Logdatei und können ihre eigenen Datensätze entsprechend modifizieren.
   ■ Um neben den Meta-Informationen auch die entsprechenden audiovisuellen Dateien zu den Clients zu transferieren, benutzt das System ein modifiziertes verschlüsseltes Synchronisationsverfahren. Dies stellt sicher, dass Titel, die auf dem Server hochgeladen wurden, auf einem verschlüsselten Kanal zu den Clients gelangen. Weiterhin stellt es sicher, daß gelöschte Titel auch von der Festplatte des Clients entfernt werden.

Es ist anzumerken, dass ein Clients eine Blackbox ohne Interaktions-Möglichkeiten darstellt. Sämtliche Einstellungen sind auf dem zentralen Server zu tätigen.

Das Verfahren besteht im Wesentlichen aus 4 Grundelementen:

### 1. Interface

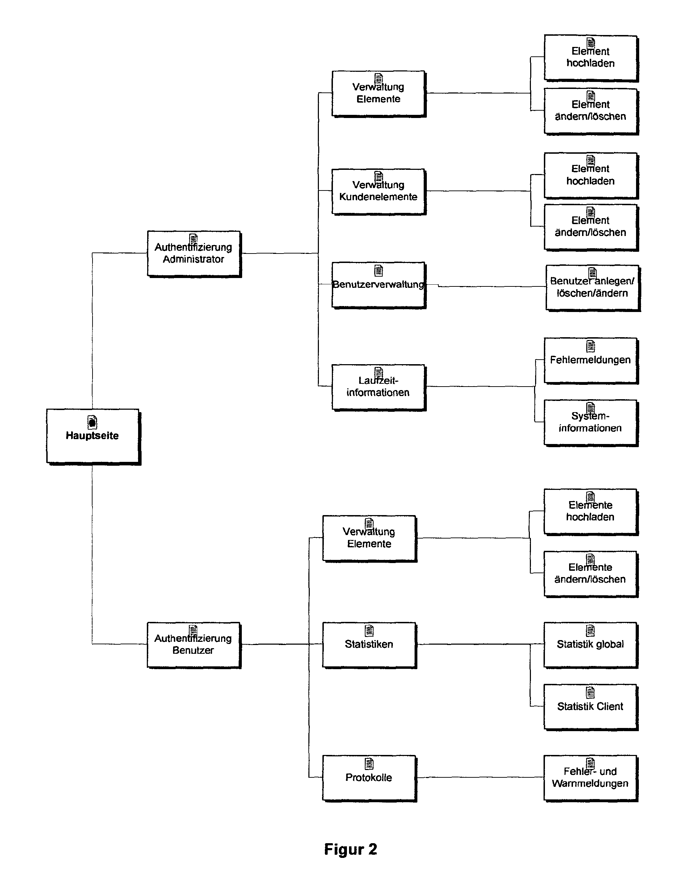

Das Interface dient als Benutzer-Schnittstelle zur Interaktion mit der Steuerungseinheit und/oder zur Verwaltung der Meta-Informationen der AudioNideo Elemente. In Figur 2 wird eine Beispielkonfiguration mit einem getrennten Benutzer- und Administrationsbereich dargestellt. Dies bewirkt eine Trennung von Privilegien anhand der vorhandenen Bedienelemente sowie bezüglich des bei der Authentifizierung angegebenen Zugangsnamen und -paßwort. Die Umsetzung des Interfaces ist nicht an eine Programmiersprache gebunden, sondern basiert vielmehr auf der Interaktion des Interfaces mit der Datenbank. Sämtliche Steuerungsanweisungen sowie die Meta-Daten werden in einem Datenbankcontainer festgehalten, wo sie von der Replikations-, der Synchronisations- sowie der Wiedergabeeinheit ausgewertet werden können.

Weiterhin sind neben eben genannten Funktionen verschiedene Überwachungs- und Analyse-Tools eingebetet. Dabei handelt es sich um Protokolle, welche Informationen über zurückliegende Verarbeitungsschritte der Einheit und eventuelle Probleme beim Arbeiten dieser Schritte anzeigen. Außerdem besteht die Möglichkeit, sich Informationen zu den aktuell laufenden Prozessen anzeigen zu lassen, sofern diese nicht aufgrund der nicht-permanenten Verbindung zwischen Client und Server in Echtzeit abrufbar sind. Es stehen unter anderem die Betriebswerte des Servers zu Verfügung, welche wiederum Aufschluß über den Betriebszustand der angeschlossenen Clients geben.

### 2. Replikation

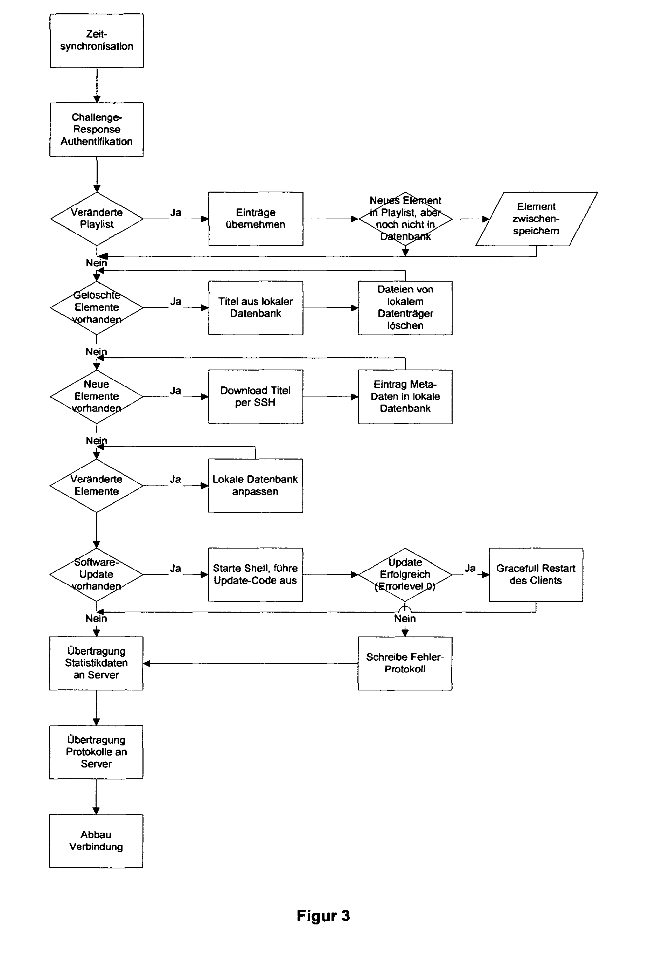

In Figur 3 wird schematisch der Ablauf des Replikationsprozesses dargestellt. Dabei wird großer Wert darauf gelegt, die Datenbestände zwischen Client und Server in einem konsistenten Zustand zu halten. Um dies zu erreichen, ist der zeitliche Ablauf der einzelnen Programmschritte daraufhin abzustimmen, dass ein auf den Server hochgeladenes Element, welches daraufhin noch einmal verändert wird, auch auf dem Client in dieser Reihenfolge bearbeitet wird.

Folgende Haupt-Arbeitsschritte werden bei der Replikation der Datenbank ausgeführt:
- Zeitsynchronisation: Dies ist wichtig, da Veränderungen an der Datenbank über einen Timestamp erkannt werden.
- Challenge-Response-Authentifikation: Identifikation des Clients sowie Aushandlung der Verschlüsselungsparameter für die Replikation.
- Veränderte Playlist: Veränderungen in der Playlist werden vom Server übernommen und in die lokale Datenbank übernommen.
- Gelöschte Elemente vorhanden: Elemente, welche auf dem Server als gelöscht markiert sind, werden sowohl aus der Datenbank entfernt (die Meta-Daten) sowie die korrespondierende Datei gelöscht.
- Neue Elemente vorhanden: Neue Elemente werden an die Synchronisationseinheit übergeben und so auf den lokalen Datenträger transferiert. Ist dies erfolgreich, wird der neue Datensatz in die lokale Datenbank eingetragen und steht somit dem Client zu Verfügung.
- Veränderte Elemente: Veränderungen an Elementen des Servers werden an den Client übertragen.

Neben diesen Punkten gibt es noch eine Reihe von Unter-Arbeitsschritten, die beispielsweise der Übermittlung von Protokolleinträgen und Statistikdaten oder der Wartung des Systems dienen.
In einer alternativen Ausgestaltung ist vorgesehen, die Replikation respektive die Synchronisation zwischen Client und Server mittels wenigstens eines Datenträgers (Diskette, CD, DVD, USB-Stick, Flashcard etc.), der an einem Client eingesetzt wird, durchzuführen. Dies erfolgt, um die Datenbestände zwischen Client und Server in einem konsistenten Zustand zu halten. Hierzu ist der zeitliche Ablauf der einzelnen Programmschritte daraufhin abzustimmen, dass ein auf dem Server z.B. mittels Datenträger oder online hochgeladenes Element, welches daraufhin noch einmal verändert wird, auch, nachdem es mittels des Datenträgers auf den Client gelangt ist, auf dem Client in dieser Reihenfolge bearbeitet wird.
Diese Haupt-Arbeitsschritte werden bei der Replikation der Datenbank ausgeführt:
- Synchronisation der Systemzeit. Dies ist wichtig, da Veränderungen an der Datenbank über einen Timestamp erkannt werden.
- Veränderungen in der Playlist werden vom Server übernommen und mittels Datenträger in die lokale Datenbank übernommen
- Elemente, welche auf dem Server als gelöscht markiert sind, werden mittels Datenträger sowohl aus der Datenbank entfernt (die Meta-Daten) sowie die korrespondierende Datei gelöscht.
- Neue Elemente werden an die Synchronisationseinheit übergeben und so auf den lokalen Datenträger transferiert. Ist dies erfolgreich, wird der neue Datensatz in die lokale Datenbank eingetragen und steht somit dem Client zu Verfügung.

In einer weiteren alternativen Ausgestaltung ist vorgesehen, in der Clientdatenbank einen Zähler zu implementieren, der beispielsweise die Anzahl der zu erlaubenden Wiedergaben regelt. Ist der Zähler abgelaufen(auf Null gesetzt), so wird die Audio- und/oder Videodatendatei gelöscht. Der Zähler wird entweder vom Server direkt mittels Datenleitung oder mittels Datenträger übermittelt und korrespondiert mit dem Wiedergabeelement. In einer anderen erfindungsgemäßen Ausgestaltung ist vorgesehen, in der Clientdatenbank eine Zeit- bzw. Datumsbegrenzung zu implementieren, die beispielsweise einen Zeitraum definiert, innerhalb dessen die Wiedergabe der besagten Audio- und/oder Videodaten zulässig ist. Ist der definierte Zeitraum, innerhalb dessen die Wiedergabe besagter Daten zulässig ist, abgelaufen, so werden die Audio- und/oder Videodaten gelöscht oder das System angewiesen, die durch Zeitablauf betroffenen Daten künftig nicht mehr zur Ausführung bzw. zur Wiedergabe zu bringen. In einer weiteren erfindungsgemäßen Weiterbildung ist vorgesehen, in der Clientdatenbank einen Zähler und eine Zeit- bzw. Datumsbegrenzung zu implementieren. Innerhalb des zulässigen Zeitraumes ist so eine definierte Anzahl von zulässigen Wiederholungen der Wiedergabe der Audio- und/oder Videodaten möglich. Nach Ablauf entweder des definierten Zeitraumes oder des definierten Zählers werden die Audio- und/oder Videodaten gelöscht, oder das System angewiesen, die durch Zeit- oder Zählerablauf betroffenen Daten künftig nicht mehr zur Ausführung bzw. zur Wiedergabe zu bringen.

### 3. Synchronisation

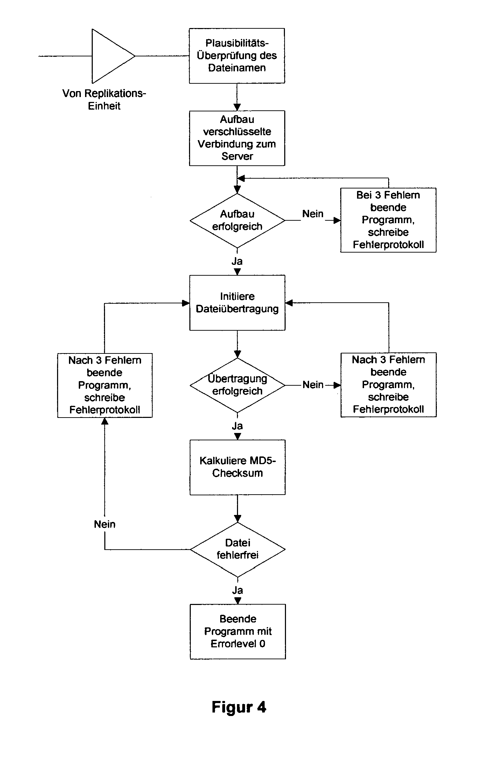

Die Synchronisationseinheit (siehe Darstellung Figur 4) wird von der Replikationseinheit aufgerufen, und dient der Erhaltung der Dateisystemkonsistenz zwischen Client und Server. Nur bei fehlerfreier Ausführung wird die Replikation des entsprechenden Datensatzes durchgeführt.
- Plausibilitätsüberprüfung des Dateinamens: Überprüfung ob eventuell ungültige Zeichen im Dateinamen vorhanden sind.
- Aufbau verschlüsselte Verbindung zum Server: Anmelden am Server sowie Aushandlung der Verschlüsselungsparameter für die Synchronisation.
- Dateiübertragung: Transfer der von der Replikationseinheit übergebenden Datei.
- MD5-Checksum: Überprüfung der Dateiintegrität der übertragenden Datei.

Zu bemerken ist, dass neben der Flußkontrolle und Fehlerkorrektur des Übertragungsprotokolls zusätzlich eine Überprüfung per MD5-Hash erfolgt, welche eine einwandfreie Erkennung von eventuellen Übertragungsfehlern garantiert.

### 4. Wiedergabe

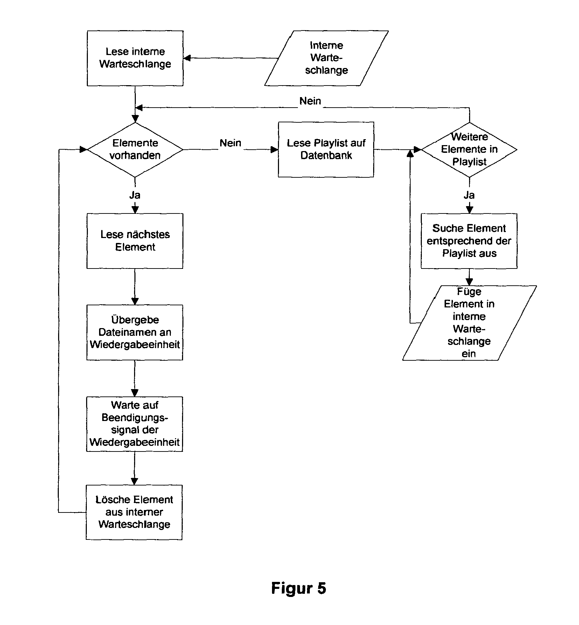

Das Wiedergabe-Element läuft nur auf dem Client und funktioniert nach dem aus Figur 5 ersichtlichen Schema. Dabei wird neben der in der Datenbank gespeicherten Playlist eine interne Warteschlange entweder gefüllt (rechter Teil) oder sukzessive nach jedem abgespieltem Element entleert. Das Programm verfügt dabei über eine Schnittstelle zur Wiedergabeeinheit des Computers, von welcher es ein Signal erhält, daß ein Titel vollständig abgespielt wurde.

## Patentansprüche

1. Vorrichtung insbesondere zur Push/Pull Distribution und/oder Wiedergabe von audio- und/oder visuellen Daten, umfassend wenigstens einen Server und wenigstens einen Client, wobei der Server wenigstens eine Datenbank aufweist, die die Metadaten der ebenfall auf dem Serverdatenträger gespeicherten audiovisuellen Daten enthält sowie eine Steuerungseinheit zur Verwaltung der audio- und/oder visuellen Daten und Metadaten, wobei der Client wenigstens eine Datenbank aufweist, die wenigstens eine Teilmenge der Serverdatenbank, die die Metadaten der ebenfalls auf dem Client-Datenträger gespeicherten audio- und/oder visuellen Daten (-Teilmenge) enthält sowie eine Steuerungseinheit zur Verwaltung und/oder Wiedergabe und/oder zum bidirektionalem Datentransfer der audio- und/oder visuellen Daten und/oder Metadaten sowie wenigstens eine Klang- und/oder Bilderzeugungseinheit aufweist.

2. Vorrichtung nach Anspruch 1, **dadurch gekennzeichnet, dass** die audio- und/oder visuellen Daten zur Generierung eines Radio- und/oder Videosignales geeignet sind.

3. Vorrichtung nach einem oder mehreren der vorgenannten Ansprüche, **dadurch gekennzeichnet, dass** sie ein Interface zur Gestaltung eines Programmablaufes (Radio- Videoprogramm) aufweist.

4. Vorrichtung nach einem oder mehreren der vorgenannten Ansprüche, **dadurch gekennzeichnet, dass** sie ein Element zur zeitdiskreten Replikation der Metadatenbestände aufweist.

5. Vorrichtung nach einem oder mehreren der vorgenannten Ansprüche, **dadurch gekennzeichnet, dass** sie ein Element zur zeitdiskreten Synchronisation der audio- und/oder visuellen Datenbestände aufweist.

6. Vorrichtung nach einem oder mehreren der vorgenannten Ansprüche, **dadurch gekennzeichnet, dass** sie ein Element zur differentiellen Synchronisation der audio- und/oder visuellen Datenbestände aufweist.

7. Vorrichtung nach einem oder mehreren der vorgenannten Ansprüche, **dadurch gekennzeichnet, dass** sie wenigstens ein Element zur Identifikation einer zulässigen Gegenstelle nach dem challenge-response - Verfahren aufweist.

8. Vorrichtung nach einem oder mehreren der vorgenannten Ansprüche, **dadurch gekennzeichnet, dass** ein Element zur Verschlüsselung sämtlicher Kommunikation zwischen Client und Server durch kryptographische Verfahren aufweist.

9. Vorrichtung nach einem oder mehreren der vorgenannten Ansprüche, **dadurch gekennzeichnet, dass** sie ein Element zur Komprimierung der zu übertragenden Daten aufweist.

10. Verfahren insbesondere zur Pull oder Push-Distribution und/oder Widergabe von audiovisuellen Daten, **dadurch gekennzeichnet, dass** eine Vorrichtung nach einem oder mehreren der vorgenannten Ansprüche zum Einsatz kommt.

11. Verfahren insbesondere zur Pull oder Push-Distribution und/oder Widergabe von audiovisuellen Daten, umfassend wenigstens einen Server und wenigstens einen Client, wobei der Server wenigstens eine Datenbank aufweist, die die Metadaten der ebenfalls auf dem Serverdatenträger gespeicherten audio- und/oder visuellen Daten enthält sowie eine Steuerungseinheit zur Verwaltung der audio- und/oder visuellen Daten und Metadaten, wobei der Client wenigstens eine Datenbank aufweist, die wenigstens eine Teilmenge der Serverdatenbank, die die Metadaten der ebenfalls auf dem Client-Datenträger gespeicherten audio- und/oder visuellen Daten enthält sowie eine Steuerungseinheit zur audio- und/oder visuellen Daten enthält sowie eine Steuerungseinheit zur Verwaltung und/oder Wiedergabe und/oder zum bidirektionalen Datentransfer der audio- und/oder visuellen Daten und/oder Metadaten sowie wenigstens eine Klang- und/oder Bilderzeugungseinheit aufweist, wobei folgende Schritte bei der Replikation der Datenbank ausgeführt werden:
- Synchronisation der Systemzeit,
- Veränderungen in der Playlist werden vom Server übernommen und in die lokale Datenbank übernommen,
- Elemente, die auf dem Server als gelöscht markiert sind, werden sowohl aus der Datenbank entfernt(Metadaten) sowie die korrespondierende Datei gelöscht,
- Neue Elemente werden an die Synchronisationseinheit übergeben und so auf den lokalen Datenträger(online/Diskette) transferiert, im Erfolgsfalle wird der neue Datensatz in die lokale Datenbank eingetragen und steht somit dem Client zur Verfügung und wobei die Synchronisationseinheit von der Replikationseinheit zur Erhaltung der Dateisystemkonsistenz zwischen Client und Server aufgerufen wird.
